# EUROPEAN PATENT SPECIFICATION

(11) **EP 2 384 926 B1**
(45) Date of publication and mention of the grant of the patent: **10.12.2014**
(21) Application number: 11164595.8
(22) Date of filing: 03.05.2011
(51) Int. Cl.: B60N 2/02, B60N 2/22, B60N 2/28

(54) **A child vehicle seat**
Kinderfahrzeugsitz
Siège enfant pour véhicule

(30) Priority: 05.05.2010 NL 2004671
(43) Date of publication of application: 09.11.2011
(73) Proprietor: Maxi Miliaan B.V., 5704 RD Helmond (NL)
(72) Inventor: Fransen, Martinus Theodorus, 5663EN, Geldrop (NL); Devaud, Christophe Hubert Daniel, 79140, Cerizay (FR)
(74) Representative: Veldman-Dijkers, Cornelia G. C.

(56) References cited:
- EP-A1- 1 122 120
- WO-A1-2008/068166
- DE-A1-102004 062 642
- FR-A1- 2 794 409

## Description

### FIELD OF THE INVENTION

The invention relates to a child vehicle seat comprising at least a seat portion, a backrest connected to the seat portion, and side supports being pivotably about pivot axes, wherein each side support is provided with a connecting element being swivelably connected to the side support about a swivel axis near a first end thereof and being movably connected to a slideable element near a second end thereof, for pivoting the side supports away from each other when moving the slideable element in a direction away from a transition between the backrest and the seat portion and vice versa.

### BACKGROUND OF THE INVENTION

Such a child vehicle seat is known from EP 1 122 120 Al. By the child vehicle seat as disclosed in EP 1 122 120 Al side supports are pivotable connected to the backrest. The side supports are provided with link bars. Ends of the link bars are connected to an adjusting nut. In the middle of the backrest a vertical slot is provided for guiding the adjusting nut. By moving the adjusting nut is the vertical slot, the ends of the link bars directly connected thereto are also being moved along the vertical slot, whereby the side supports are being pivoted towards or away from each other. In this manner the seat can easily be adapted to the size of the child. However, a disadvantage of such a direct coupling between the link bars and the adjusting nut is that the freedom for the design of the seat is limited.

### SUMMARY OF THE INVENTION

It is an object of the invention to provide a child vehicle seat with improved pivotable side supports.

This object is achieved by the child vehicle seat according to the invention in that the connecting elements are each movable with respect to the slideable element by means of a guiding element being slidably located in a corresponding slot, wherein first ends of the two slots are located closer to each other than second ends of the slots.

By having connecting elements which are movable with respect to the slideable element and having two slots with a different distance between the first ends than between the second ends the freedom of design is enlarged.

Due to the connecting element the pivot axes of side supports can be located at any desired angle and at any desired location with respect to the slideable element.

It has to be noted that by the child vehicle seat as disclosed in FR 2794409, a headrest is slideably connected to the backrest. The side supports being pivotable connected to the backrest. Furthermore, the side supports are directly coupled to the headrest by means of pins being guided in troughs. By moving the headrest away from or towards the seat portion and the side supports, the side supports are being pivoted away or towards each other, respectively. In this manner the seat can easily be adapted to the size of the child. However, a disadvantage of such a direct coupling between the headrest and the side supports is that the freedom for the design of the seat is limited.

An embodiment of the child vehicle seat according to the invention is characterized in that the slideable element is provided with the two slots, whereas each connecting element is provided near its second end with the guiding element being slidably located in corresponding slot.

By moving the slideable element, the slots located in the slideable element are being moved as well, due to which the guiding elements of the connecting elements will slide through the slots.

Another embodiment of the child vehicle seat according to the invention is characterized in that the first or second ends are located closer to the transition between the backrest and the seat portion than the other ends.

In case that the first ends are located closer to the transition than the second ends, the guiding elements of the connecting elements are being moved towards each other and also the first ends are being moved towards each other, by moving the slideable element away from the transition. When a surface of the side support for supporting the child is located on a side of the pivot axis avert of the swivel axis, the support surfaces will be moved away from each other by the movement of the first ends of the connecting elements towards each other and vice versa.

In case that the second ends are located closer to the transition than the first ends, the guiding elements of the connecting elements are being moved away from each other and also the first ends are being moved away from each other, by moving the slideable element away from the transition. When a surface of the side support for supporting the child and the swivel axis are located on the same side of the pivot axis, the support surfaces will be moved away from each other by the movement of the first ends of the connecting elements away from each other and vice versa. So, in case that the surface of the side support for supporting the child is located on the same side of the pivot axis as the swivel axis, the slots need to located further away from each other near the transition between the backrest and the seat portion than at a distance thereof.

An embodiment of the child vehicle seat according to the invention is characterized in that the slideable element is a headrest being movably connected to the backrest, whereas the headrest cooperates with the side supports for pivoting the side supports away from each other when moving the headrest in a direction away from the transition between the backrest and the seat portion and vice versa.

For a larger child, the distance from the transition between the backrest and the seat portion to the headrest need to be larger. When enlarging the distance by moving the headrest away from the seat portion, also the distance between the side supports will be enlarged.

Another embodiment of the child vehicle seat according to the invention is characterized in that the slideable element is the seat portion being movably connected to a base of the child vehicle seat, whereas the seat portion cooperates with the side supports for pivoting the side supports away from each other when moving the seat portion in a direction away from the transition between the backrest and the seat portion and vice versa.

For a larger child a longer seat portion is more convenient. By moving the seat portion away from the backrest, simultaneously the distance between the side supports will be enlarged to accommodate the larger child.

The side supports may be pivotably connected to the backrest and/or the base on both sides of the seat portion. The side supports being pivotably connected to the backrest support the shoulders of a child, whilst the side supports being pivotably connected to the base support the legs of a child.

Another embodiment of the child vehicle seat according to the invention is characterized in that the pivot axes of the side supports enclose an angle with each other, wherein the pivot axes are located further away from to each other near the transition between the backrest and the seat portion than at a distance thereof.

Due to such an orientation of the pivot axes, close contact between the shoulders is maintained at side impact. It is an optimum between freedom of movement of the child and safety during side impact. Of course the same orientation of the pivot axes can be used for the side supports near the seat portion.

A further embodiment of the child vehicle seat according to the invention is characterized in that the pivot axis and the swivel axis of the side support extend parallel at a distance of each other.

Due to the parallel orientation, movement of the side support by the connecting element is relatively easy. The distance between the pivot axis and te swivel axis need to be such that the desired movement of the side supports will occur to provide sufficient protection when an accident with side impact occurs.

### BRIEF DESCRIPTION OF THE DRAWINGS

The invention will be explained in more detail with reference to the drawings, in which
figure 1A-1C are perspective views of a first embodiment of a child vehicle seat according to the invention, with the headrest in the lowest, a middle and highest position respectively;
figure 2A-2C are front views of upper parts of the child vehicle seat as shown in figures 1A-1C, with the headrest in the lowest, a middle and highest position respectively;
figure 3A-3C are front views of upper parts of the child vehicle seat as shown in figures 2A-2C without the backrest, with the headrest in the lowest, a middle and highest position respectively;
figure 4A-4C are front views of a connecting element and side support of the child vehicle seat as shown in figures 1A-3C, when the headrest is in the lowest, a middle and highest position respectively;
figure 5A-5C are perspective views of a second embodiment of a child vehicle seat according to the invention, with the seat portion in different positions;
figure 6A-6C are perspective views of a third embodiment of a child vehicle seat according to the invention, with the head rest and side supports connected to the base in different positions;
figure 7A-7C are perspective views of a fourth embodiment of a child vehicle seat according to the invention, with the head rest, the side supports connected to the backrest and side supports connected to the base in different positions.
Like parts are indicated by the same reference numbers in the figures.

### DETAILED DESCRIPTION OF EMBODIMENTS

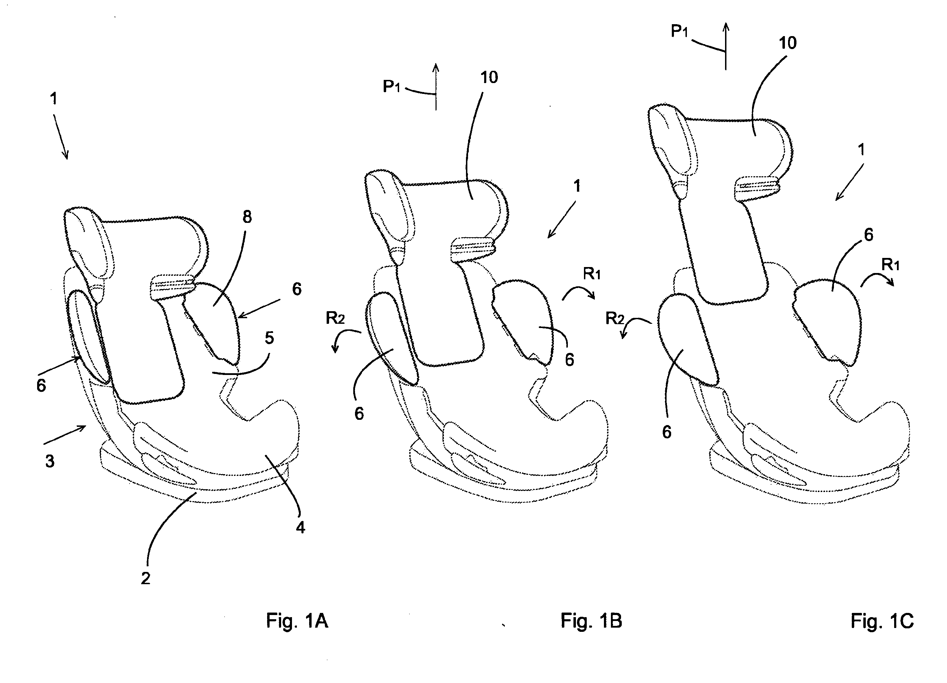

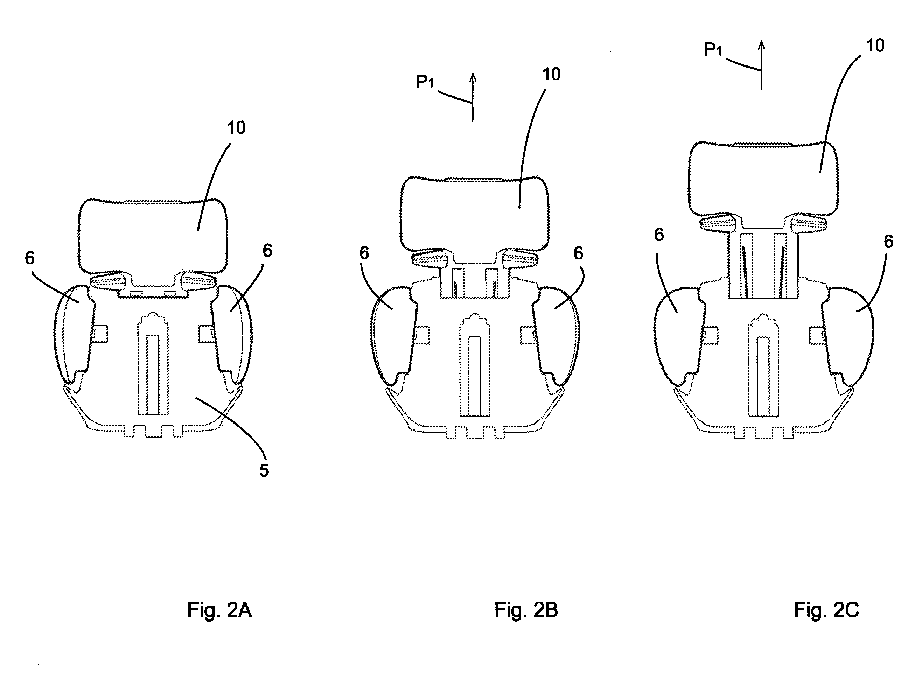

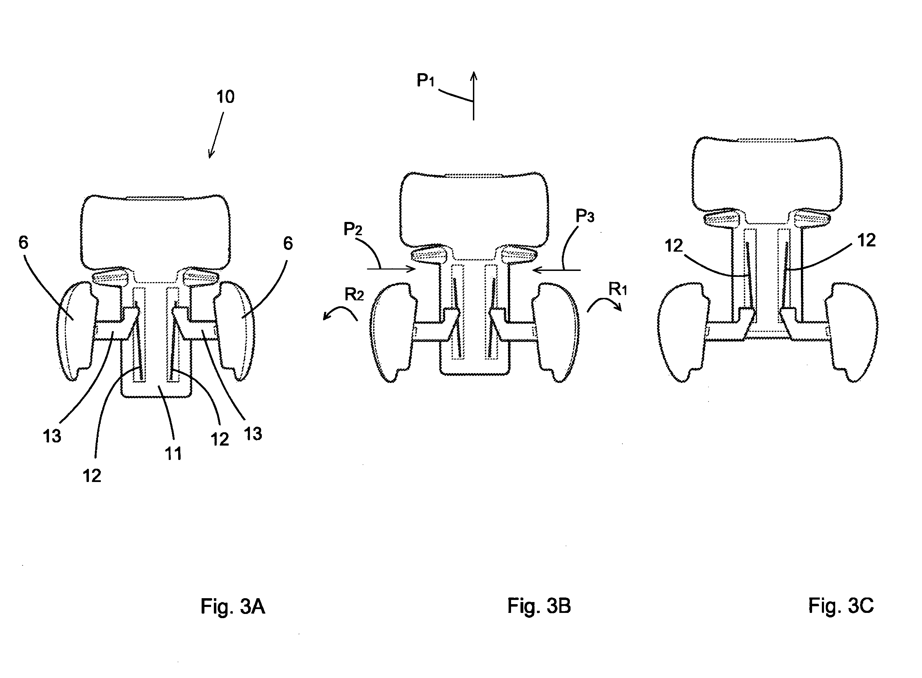

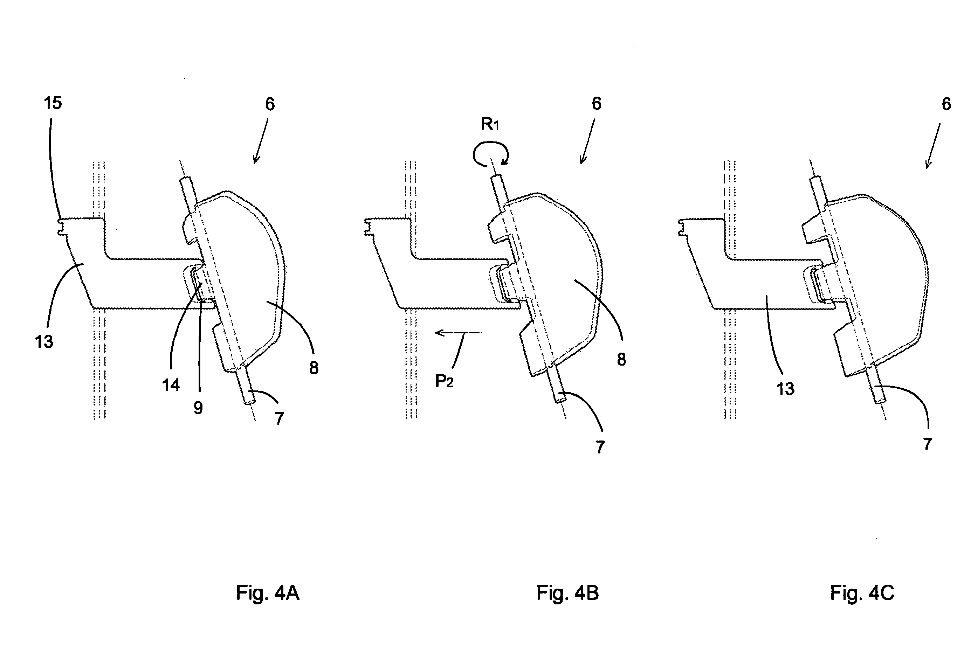

Fig. 1A, 2A, 3A and 4A show different views of a child vehicle seat 1 according to the invention. The child vehicle seat 1 comprises a base 2 and a seat 3 mounted on the base 2. The seat 3 comprises a seat portion 4 and backrest 5 connected to the seat portion 4 near a transition between the backrest 5 and the seat portion 4. On both lateral sides, the backrest 5 is provided with side supports 6 being pivotably connected by means of pivot axes to the backrest 5. Each side support 6 is provided with a support surface 8 for supporting a child in a sidewards direction. On a side of the pivot axis 7 avert of the support surface 8, the side support 6 is provided with a flange 9.

The seat 3 also comprises a headrest 10 as slideable element, which headrest 10 is located between the two side supports 6 and being slidably connected to the backrest 5 to be able to be moved away from and towards the seat portion 4 to adjust the headrest 10 to the size of the child using the child vehicle seat 1.

The headrest 10 is provided with a plate shaped element 11 with two elongated slots 12. The slots 12 enclose an angle with each other wherein the slots are located closer to each other near the seat portion 4 than at a distance thereof.

The seat 3 also comprises two connecting elements 13. Each connecting element 13 is swivelably connected by means of a swivel axis 14 to a flange 9 of one of the side supports 6 near a first end. Near a second end thereof, the connecting element 13 is provided with a guiding element 15 which is slidably located in one of the slots 12 of the headrest 10.

The child vehicle seat 1 works as follows.

In the first position as shown in figures 1A, 2A, 3A, 4A the headrest 10 is in the lowest position, meaning that it is relatively close to the seat portion 4. The distance between the support surfaces 8 is also relatively small, compared with the distances in the positions of the child vehicle seat 1 as shown in figures 1B and 1C.

In the first position, the child vehicle seat 1 is suitable for a relatively small child.

As is shown in figures 1B, 2B, 3B, 4B, the headrest 10 is being moved in a direction as indicated by arrow P1 to adjust the headrest 10 to a larger child. By doing so, slots 12 will be moved along the guiding elements 15 on the connecting elements 13 and the guiding elements 15 will be moved towards each other in the directions as indicated by arrows P2, P3. Also the flanges 9 of the side supports 6 will be moved in these directions P2, P3, wherein the side supports 6 will be pivoted about the pivot axes 7 in directions as indicated by arrows R1, R2. The support surfaces 8 of the side supports 6 pivot away from each other and are now located at a larger distance of each other that is more suitable for the larger child.

The headrest 10 can be moved from the lowest position as shown in fig. 1A via a middle position as shown in fig. 1B to the highest position as shown in fig. 1C, 2C, 3 and 4C and vice versa. In the highest position, the guiding elements 15 of the connecting elements 13 are located near ends of the slots 12. The support surfaces 8 of the supports 6 are pivoted further away from each other to be a suitable for a relatively large child.

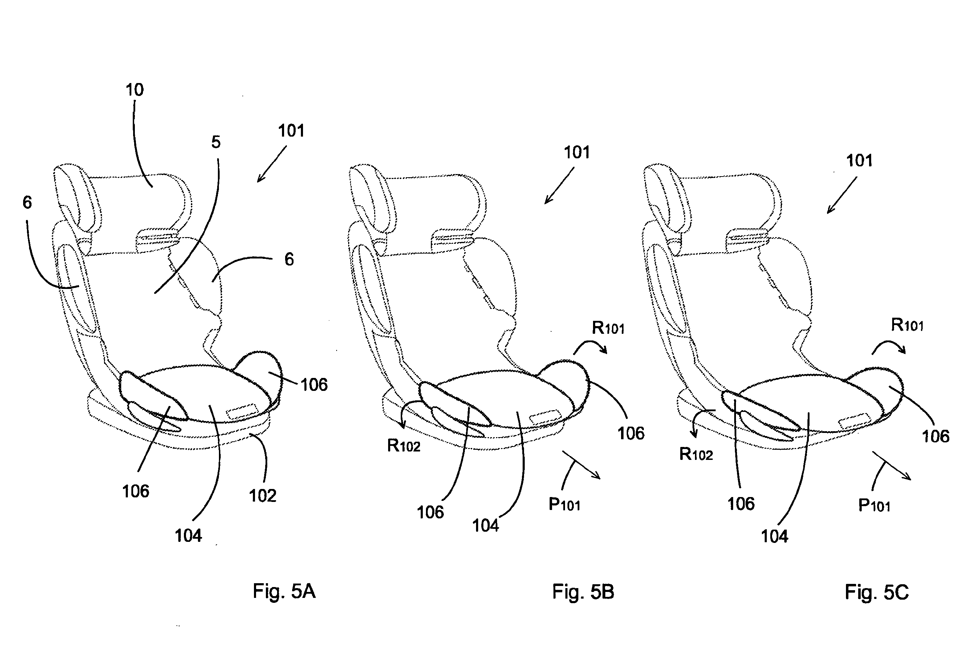

Fig. 5A, 5B and 5C show different views of a child vehicle seat 101 according to the invention. The child seat 101 differs from the child seat 1 in that it is provided with adjustable side supports 106 on both sides of the seat portion 104. The side supports 106 are pivotably connected to the base 102 in the same manner as the side supports 6 of child seat 1 are pivotable connected to the backrest 5. The seat 101 comprises the seat portion 104 as slideable element, which seat portion 104 is located between the two side supports 106 and being slidably connected to the base 102 in the same manner as the headrest 10 of child seat 1 is slidably connected to the backrest 5. The seat portion 104 is provided with elongated slots similar to the slide 11 of the headrest 10 of child seat 1. The child seat 101 also comprises connecting elements similar to the connecting elements 13 of the child seat 1. By moving the seat portion 104 in a direction as indicated by arrow P101, the side supports 106 will be pivoted about pivot axes in directions as indicated by arrows R101, R102. The support surfaces of the side supports 106 pivot away from each other and are now located at a larger distance of each other that is more suitable for the larger child. The child seat 101 can also be provided with adjustable side supports 6 and an adjustable headrest 10 like the child seat 1.

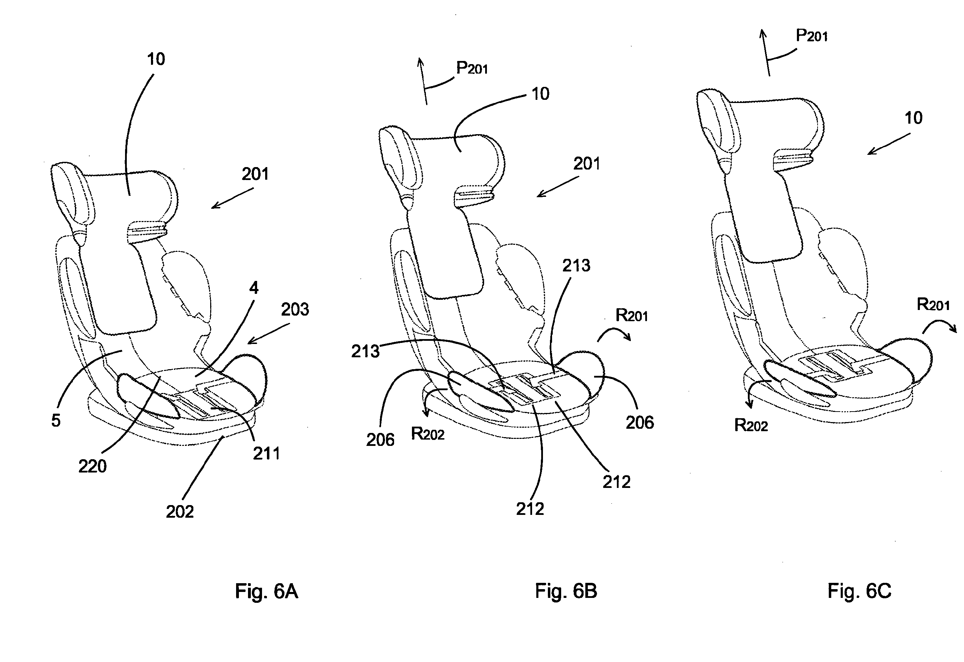

Fig. 6A, 6B and 6C show different views of a child vehicle seat 201 according to the invention. The child vehicle seat 201 comprises a base 202 and a seat 203 mounted on the base 202. The seat 203 comprises a seat portion 4 and backrest 5 connected to the seat portion 4 near a transition between the backrest 5 and the seat portion 4. On both lateral sides, the seat portion 4 is provided with side supports 206 being pivotably connected about pivot axes to the base 202. To the supports 206 connecting elements 213 are swivelably connected about swivel axes. The swivel axis and the support surface of the support 206 are located on the same side of the pivot axis. On a side remote of the supports 206, the connecting elements 213 are provided with guiding elements which are slidably located in slots 212 of a slidable plate 211. The slots 212 are located closer to each other near the front side of the seat portion 4 than near the backrest 5. The seat 203 also comprises a headrest 10 as slidable element, which headrest is slidably connected to the backrest 5 to be able to be moved away from and towards the seat portion 4 to adjust the headrest 10 to the size of the child using the child vehicle seat 201. The slidable plate 211 is connected to the slidable headrest 10 by means of a wire 220. By moving the headrest 10 in a direction as indicated by arrow P201, the slidable plate 211 will be moved towards the backrest 5, whereby the side supports 206 are pivoted way from each other in directions as indicated by arrows R201, R202 and vice versa.

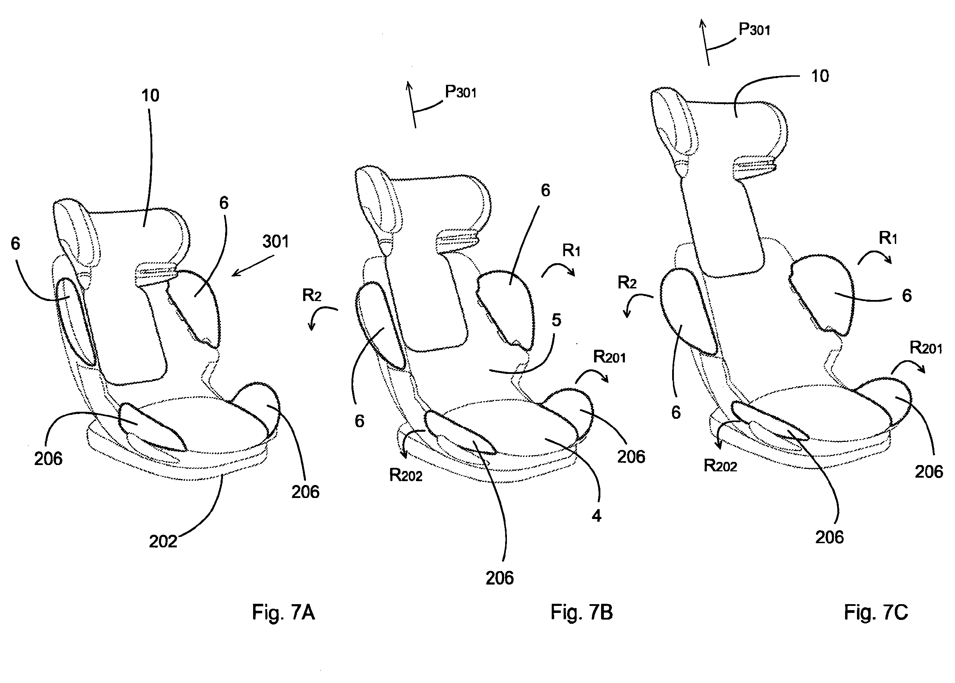

Fig. 7A, 7B and 7C show different views of a child vehicle seat 301 according to the invention. The child seat 301 is a combination of the child seat 1 and the child seat 201, wherein by moving the headrest 10 in a direction as indicated by arrow P301 both pairs of side supports 6, 206 pivotably connected to the backrest 5 and the base 202 respectively, are pivoted in directions as indicated by arrows R1, R2, R201, R202 and vice versa.

The headrest 10 and/or seat portion 104 are preferably provided with known means to lock it in any desired position.

The backrest may be directly connected to the seat portion or may be connected to it by means of the base.

It is possible to provide a releaseable connection between the connection element 13 and the flange 9 of the side support 6 so that in case of misuse wherein a relatively large pushing force is applied on the side support 6 the side support 6 will be disconnected from the connection element 13.

It is also possible to provide the connecting elements with slots and to provide the headrest and/or seat portion with guiding elements being slideable in the slots.

Other variations to the disclosed embodiments can be understood and effected by those skilled in the art in practising the claimed invention, from a study of the drawings, the disclosure, and the appended claims. In the claims, the words like "comprising" and "having" do not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A child vehicle seat (1, 101, 201, 301) comprising at least a seat portion (4, 104), a backrest (5) connected to the seat portion (4, 104), and side supports (6, 106, 206) being pivotably about pivot axes (7), wherein each side support (6, 106, 206) is provided with a connecting element (13) being swivelably connected to the side support (6, 106, 206) about a swivel axis (14) near a first end thereof and being movably connected to a slideable element near a second end thereof, for pivoting the side supports (6, 106, 206) away from each other when moving the slideable element (10, 104) in a direction away from a transition between the backrest (5) and the seat portion (4, 104) and vice versa, **characterised in that** the connecting elements (13) are each movable with respect to the slideable element by means of a guiding element (15) being slidably located in a corresponding slot (12, 212), wherein first ends of the two slots (12, 212) are located closer to each other than second ends of the slots (12, 212).

2. A child vehicle seat (1, 101, 201, 301) according to claim 1, **characterised in that** the slideable element is provided with the two slots (12, 212), whereas each connecting element (13) is provided near its second end with the guiding element (15) being slidably located in corresponding slot (12, 212).

3. A child vehicle seat (1, 101, 201, 301) according to claim 1 or 2, **characterised in that** the first or second ends are located closer to the transition between the backrest (5) and the seat portion (4, 104) than the other ends.

4. A child vehicle seat (1, 101, 201, 301) 301) according to one of the preceding claims, **characterised in that** the slideable element is a headrest (10) being movably connected to the backrest (5), whereas the headrest (10) cooperates with the side supports (6, 106, 206) for pivoting the side supports (6, 106, 206) away from each other when moving the headrest (10) in a direction away from the transition between the backrest (5) and the seat portion (4, 104) and vice versa.

5. A child vehicle seat (1, 101, 201, 301) according to one of the preceding claims 1, 2 or 3, **characterised in that** the slideable element is the seat portion (104) being movably connected to a base (102) of the child vehicle seat, whereas the seat portion (104) cooperates with the side supports (6, 106, 206) for pivoting the side supports (6, 106, 206) away from each other when moving the seat portion (104) in a direction away from the transition between the backrest (5) and the seat portion (104) and vice versa.

6. A child vehicle seat (1, 101, 201, 301) 301) according to one of the preceding claims 1-4, **characterised in that** the side supports (6, 106, 206) being pivotably connected to the backrest (5) about pivot axes (7).

7. A child vehicle seat (1, 101, 201, 301) according to one of the preceding claims, **characterised in that** the side supports (6, 106, 206) being pivotably connected to a base (102, 202) of the child vehicle seat about pivot axes.

8. A child vehicle seat (1, 101, 201, 301) according to one of the preceding claims, **characterised in that** the pivot axes (7) of the side supports (6, 106, 206) enclose an angle with each other, wherein the pivot axes (7) are located further away from to each other near the transition between the backrest (5) and the seat portion (4, 104) than at a distance thereof.

9. A child vehicle seat (1, 101, 201, 301) according to one of the preceding claims, **characterised in that** the pivot axis (7) and the swivel axis (14) of the side support (6, 106, 206) extend parallel at a distance of each other.

## Patentansprüche

1. Kinderfahrzeugsitz (1, 101, 201, 301), umfassend mindestens einen Sitzabschnitt (4, 104), eine mit dem Sitzabschnitt (4, 104) verbundene Rückenlehne (5) und um Drehachsen (7) drehbare Seitenlehnen (6, 106, 206), wobei jede Seitenlehne (6, 106, 206) in der Nähe ihres ersten Endes mit einem um eine Schwenkachse (14) schwenkbar mit der Seitenlehne (6, 106, 206) verbundenen Verbindungselement (13) versehen ist und in der Nähe ihres zweiten Endes mit einem verschiebbaren Element beweglich verbunden ist, um die Seitenlehnen (6, 106, 206) voneinander weg zu drehen, wenn das verschiebbaren Element (10, 104) in einer Richtung vom Übergang zwischen Rückenlehne (5) und Sitzabschnitt (4, 104) weg bewegt wird und umgekehrt, **dadurch gekennzeichnet, dass** die Verbindungselemente (13) jeweils mittels eines verschiebbaren, in einem entsprechenden Schlitz (12, 212) verschiebbar angeordneten Führungselements (15) bezüglich des verschiebbaren Elements beweglich sind, wobei die ersten Enden der beiden Schlitze (12, 212) näher zueinander angeordnet sind als die zweiten Enden der Schlitze (12, 212).

2. Kinderfahrzeugsitz (1, 101, 201, 301) nach Anspruch 1, **dadurch gekennzeichnet, dass** das verschiebbaren Element mit den beiden Schlitzen (12, 212) versehen ist, während jedes Verbindungselement (13) an seinem zweiten Ende mit dem verschiebbar im entsprechenden Schlitz (12, 212) angeordneten Führungselement (15) versehen ist.

3. Kinderfahrzeugsitz (1, 101, 201, 301) nach Anspruch 1 oder 2, **dadurch gekennzeichnet, dass** die ersten oder die zweiten Enden näher zum Übergang zwischen Rückenlehne (5) und Sitzabschnitt (4, 104) angeordnet sind als die anderen Enden.

4. Kinderfahrzeugsitz (1, 101, 201, 301) nach einem der vorangehenden Ansprüche, **dadurch gekennzeichnet, dass** das verschiebbare Element eine bewegbar mit der Rückenlehne (5) verbundene Kopfstütze (10) ist, während die Kopfstütze (10) mit den Seitenlehnen (6, 106, 206) zusammenwirkt, um die Seitenlehnen (6, 106, 206) voneinander weg zu drehen, wenn das verschiebbare Element (10, 104) in einer Richtung vom Übergang zwischen Rückenlehne (5) und Sitzabschnitt (4, 104) weg bewegt wird und umgekehrt.

5. Kinderfahrzeugsitz (1, 101, 201, 301) nach einem der vorangehenden Ansprüche 1, 2 oder 3, **dadurch gekennzeichnet, dass** das verschiebbare Element der beweglich mit der Grundplatte (102) des Kinderfahrzeugsitzes verbundene Sitzabschnitt (104) ist, während der Sitzabschnitt (104) mit den Seitenlehnen (6, 106, 206) zusammenwirkt, um die Seitenlehnen (6, 106, 206) voneinander weg zu drehen, wenn der Sitzabschnitt (4, 104) in einer Richtung vom Übergang zwischen Rückenlehne (5) und Sitzabschnitt (4, 104) weg bewegt wird und umgekehrt.

6. Kinderfahrzeugsitz (1, 101, 201, 301) nach einem der vorangehenden Ansprüche 1 bis 4, **dadurch gekennzeichnet, dass** die Seitenlehnen (6, 106, 206) um Drehachsen (7) drehbar mit der Rückenlehne (5) verbunden sind.

7. Kinderfahrzeugsitz (1, 101, 201, 301) nach einem der vorangehenden Ansprüche, **dadurch gekennzeichnet, dass** die Seitenlehnen (6, 106, 206) um Drehachsen drehbar mit der Grundplatte (102, 202) des Kinderfahrzeugsitzes verbunden sind.

8. Kinderfahrzeugsitz (1, 101, 201, 301) nach einem der vorangehenden Ansprüche, **dadurch gekennzeichnet, dass** die Drehachsen (7) der Seitenlehnen (6, 106, 206) miteinander einen Winkel einschließen, wobei die Drehachsen (7) in der Nähe des Übergangs zwischen Rückenlehne (5) und Sitzabschnitt (4, 104) weiter voneinander entfernt angeordnet sind als entfernt von diesem Übergang.

9. Kinderfahrzeugsitz (1, 101, 201, 301) nach einem der vorangehenden Ansprüche, **dadurch gekennzeichnet, dass** die Drehachse (7) und die Schwenkachse (14) der Rückenlehne (6, 106, 206) voneinander beabstandet parallel verlaufen.

## Revendications

1. Siège de sécurité enfant pour véhicule (1, 101, 201, 301) comprenant au moins une partie siège (4, 104), un dossier (5) raccordé à la partie siège (4, 104), et des supports latéraux (6, 106, 206) pivotant autour d'axes de pivotement (7), dans lequel chaque support latéral (6, 106, 206) est pourvu d'un élément de raccordement (13) raccordé de façon rotative au support latéral (6, 106, 206) autour d'un axe de rotation (14) près d'une première extrémité de celui-ci et étant raccordé de façon mobile à un élément coulissant près d'une seconde extrémité de celui-ci, pour faire pivoter les supports latéraux (6, 106, 206) pour les éloigner l'un de l'autre lors du déplacement de l'élément coulissant (10, 104) dans une direction s'éloignant d'une transition entre le dossier (5) et la partie siège (4, 104) et vice versa, **caractérisé en ce que** les éléments de raccordement (13) sont chacun mobiles par rapport à l'élément coulissant au moyen d'un élément de guidage (15) situé de façon coulissante dans une fente correspondante (12, 212), dans lequel des premières extrémités des deux fentes (12, 212) sont situées plus près l'une de l'autre que des secondes extrémités des fentes (12, 212).

2. Siège de sécurité enfant pour véhicule (1, 101, 201, 301) selon la revendication 1, **caractérisé en ce que** l'élément coulissant est pourvu des deux fentes (12, 212), alors que chaque élément de raccordement (13) est pourvu, près de sa seconde extrémité, de l'élément de guidage (15) situé de façon coulissante dans la fente correspondante (12, 212).

3. Siège de sécurité enfant pour véhicule (1, 101, 201, 301) selon la revendication 1 ou 2, **caractérisé en ce que** les première ou seconde extrémités sont situées plus près de la transition entre le dossier (5) et la partie siège (4, 104) que les autres extrémités.

4. Siège de sécurité enfant pour véhicule (1, 101, 201, 301) selon une des revendications précédentes, **caractérisé en ce que** l'élément coulissant est un appui-tête (10) raccordé au dossier (5) de façon mobile, alors que l'appui-tête (10) coopère avec les supports latéraux (6, 106, 206) pour faire pivoter les supports latéraux (6, 106, 206) pour les éloigner l'un de l'autre lors du déplacement de l'appui-tête (10) dans une direction s'éloignant de la transition entre le dossier (5) et la partie siège (4, 104) et vice versa.

5. Siège de sécurité enfant pour véhicule (1, 101, 201, 301) selon une des revendications précédentes 1, 2 ou 3, **caractérisé en ce que** l'élément coulissant est la partie siège (104) raccordée de façon mobile à une base (102) du siège de sécurité enfant pour véhicule, alors que la partie siège (104) coopère avec les supports latéraux (6, 106, 206) pour faire pivoter les supports latéraux (6, 106, 206) pour les éloigner l'un de l'autre lors du déplacement de la partie siège (104) dans une direction s'éloignant de la transition entre le dossier (5) et la partie siège (104) et vice versa.

6. Siège de sécurité enfant pour véhicule (1, 101, 201, 301) selon une des revendications précédentes 1 à 4, **caractérisé en ce que** les supports latéraux (6, 106, 206) sont raccordés de façon pivotante au dossier (5) autour d'axes de pivotement (7).

7. Siège de sécurité enfant pour véhicule (1, 101, 201, 301) selon une des revendications précédentes, **caractérisé en ce que** les supports latéraux (6, 106, 206) sont raccordés de façon pivotante à une base (102, 202) du siège de sécurité enfant pour véhicule autour d'axes de pivotement.

8. Siège de sécurité enfant pour véhicule (1, 101, 201, 301) selon une des revendications précédentes, **caractérisé en ce que** les axes de pivotement (7) des supports latéraux (6, 106, 206) forment un angle l'un avec l'autre, dans lequel les axes de pivotement (7) sont situés de façon plus éloignée l'un de l'autre près de la transition entre le dossier (5) et la partie siège (4, 104) qu'à une distance de celle-ci.

9. Siège de sécurité enfant pour véhicule (1, 101, 201, 301) selon une des revendications précédentes, **caractérisé en ce que** l'axe de pivotement (7) et l'axe de rotation (14) du support latéral (6, 106, 206) s'étendent parallèlement à une distance l'un de l'autre.
